# EUROPÄISCHE PATENTSCHRIFT

(11) **EP 2 704 367 B1**
(45) Veröffentlichungstag und Bekanntmachung des Hinweises auf die Patenterteilung: **12.10.2016**
(21) Anmeldenummer: 13182236.3
(22) Anmeldetag: 29.08.2013
(51) Int. Cl.: H04L 12/28

(54) **Verbrauchersteuerverfahren und Steuervorrichtung auf Basis eines Energieverbrauchsprofils**
Consumer control method and control device based on an energy consumption profile
Procédé de commande de la consommation et dispositif de commande basé sur un profil de consommation d'énergie

(30) Priorität: 30.08.2012 DE 102012108065
(43) Veröffentlichungstag der Anmeldung: 05.03.2014
(73) Patentinhaber: EnBW Energie Baden-Württemberg AG, 76131 Karlsruhe (DE)
(72) Erfinder: Karcher, Peter, 51469 Bergisch-Gladbach (DE); Hausen, Axel, 61231 Bad Nauheim (DE); Hamon, Alexandre, 51105 Köln (DE); Scholz, Sebastian, 50678 Köln (DE)
(74) Vertreter: Kaufmann, Ursula Josefine

(56) Entgegenhaltungen:
- EP-A1- 1 115 263
- WO-A1-2012/001658
- WO-A2-2010/057947
- US-A1- 2007 233 285
- US-A1- 2011 046 805
- SAJAL K DAS ET AL: "THE ROLE OF PREDICTION ALGORITHMS IN THE MAVHOME SMART HOME ARCHITECTURE", IEEE WIRELESS COMMUNICATIONS, IEEE SERVICE CENTER, PISCATAWAY, NJ, US, Bd. 9, Nr. 6, 1. Dezember 2002 (2002-12-01), Seiten 77-84, XP011093895, ISSN: 1536-1284, DOI: 10.1109/MWC.2002.1160085

## Beschreibung

Die Erfindung betrifft ein Energieverbrauchersteuerverfahren und eine diesbezügliche Steuervorrichtung auf Basis eines Energieverbrauchsprofils zur Steuerung einzelner Verbraucher, insbesondere einer Raumheizung innerhalb eines Gebäudes nach den unabhängigen Ansprüchen.

### STAND DER TECHNIK

Aus dem Stand der Technik ist bekannt, dass Energieverbraucher, insbesondere Raumheizungen, Rollladen- und Beleuchtungssteuerungen, Klimaanlagen nach Bedürfnissen des Benutzers individuell gesteuert werden. Insbesondere Klimaanlagen und Raumheizungen sind träge, d.h. sie können nicht auf Knopfdruck ein gewünschtes Raumklima bereitstellen und benötigen mehrere Stunden Vorlaufzeit. Rollladen- und Markisensteuerungen zur Verdunkelung müssen insbesondere eingesetzt werden, um ein Überheizen von Räumen zu vermeiden, und eine zu hohe Lichtintensität zu verhindern, insbesondere in Momenten, in denen der Nutzer anwesend ist. Dennoch können diese - intelligent eingesetzt - auch zur Erwärmung von Räumen und Gebäuden eingesetzt werden, sofern eine Sonneneinstrahlung den Benutzer nicht stört. Deshalb wurden intelligente Steuerverfahren für derartige Verbraucher, insbesondere Heizungs-, Kühl- und Abschattungsanlagen entwickelt, die nach festgelegten Zeitplänen ein gewünschtes Raumklima zur Verfügung stellen können. Allerdings sind solche zeitgesteuerten Abläufe unflexibel, so dass bei Änderungen des Nutzungsverhaltens eine Neuprogrammierung erforderlich wird, und der Benutzer gezwungen ist, manuell nach zu regeln.

Intelligente Zähler (Smart Meter) messen den Energieverbrauch oder die Energieproduktion, (im Folgenden nur Energieverbrauch) in kurzen Zeitintervallen. Beispiele hierfür sind Photovoltaik-Anlagen, Gesamthaushaltsstrom, einzelne Geräte, Wärmepumpe, etc. Die entsprechenden Daten liegen im Zähler oder auf zentralen Servern über längere Zeiträume vor. Die aufgezeichneten Energieverbrauchswerte Ee über einen langen Verbrauchserfassungszeitraum Te spiegeln ein Nutzerverhalten, insbesondere An- und Abwesenheit wieder. Diese Daten werden bisher lediglich zur Berechnung von Energiekosten genutzt.

Für ein intelligentes Energiemanagement in einem einzelnen Haushalt oder an einer einzelnen oder mehreren intelligenten Messstelle (im Folgenden nur Haushalt) werden Prognosen des Energieverbrauchs vorteilhaft. Können solche Prognosen vorgenommen werden, kann auf deren Basis eine Steuerung einzelner Energieverbraucher, beispielsweise Raumheizungen, Klimaanlagen, Abschattungsanlagen, die träge arbeiten, aber auch beispielsweise Haushaltsgeräte wie Waschmaschine, Trockner oder Backofen in Betrieb gesetzt werden, um bei einer prognostizierten Anwesenheit eines Benutzers eine angenehme Lebensatmosphäre bieten zu können.

Daneben kann auf Basis von prognostizierten Energieverbräuchen - insbesondere bedingt durch die Anwesenheit und die Bedürfnisse eines Benutzers - dabei werden unter einem Benutzer auch eine Mehrzahl von Bewohnern, beispielsweise eine Familie verstanden - Energie von regenerativen Energiequellen wie z.B. Photovoltaik, Solarthermie, Wärmepumpe, Windkraft etc. gespeichert werden, um für den Eigenverbrauch in ausreichender Menge zur Verfügung gestellt zu werden. Kann eine längere Abwesenheit des Benutzers prognostiziert werden, so kann erzielte regenerative Energie ins Netz abgegeben, beim zu erwartenden Eigenverbrauch beispielsweise in einen lokalen Energiespeicher (z.B. Akkumulator, Warmwasserbehälter, Kältespeicher etc.) eingespeichert werden.

Aus der US 2010/0161149 A1 ist beispielsweise ein adaptives und benutzerorientiertes Steuerungssystem für einen Energieverbrauch von Endgeräten bekannt, wobei eine prognostizierte Ankunftszeit des Benutzers zuhause vorhergesagt und die entsprechenden Anwendungen oder Geräte dementsprechend aktiviert werden. Der Aufenthaltsort des Benutzers kann beispielsweise durch ein Positionserkennungssystem erkannt und an das Energiesteuersystem übertragen werden. Aufgrund des aktuellen Aufenthaltsorts und der Vorlieben des Benutzers wird bestimmt, welche Geräte ein- bzw. auszuschalten sind.

Die WO 2012/001658 A1 beschreibt ein Verfahren zur Steuerung einer Hausautomatisierungseinrichtung, die mit Steuerungsmitteln über ein Hausautomatisierungsnetzwerk verbunden ist, über welches Steuerungsbefehle an die Hausautomatisierungseinrichtung geschickt werden, wobei eine Überwachungseinheit benutzt wird, die mit dem Hausautomatisierungsnetzwerk verbunden ist. Das Verfahren umfasst einen Erkennungsschritt, der, durch die Überwachungseinheit ausgeführt, eine Aktivierung der Hausautomatisierungseinrichtung in fortlaufender Reihenfolge, beispielsweise eines Lüftungssystems, welche durch die Steuerungsmittel ausgeführt wird, erkennt. Weiter umfasst das Verfahren einen Aufnahmeschritt, der, durch die Überwachungseinheit ausgeführt, ein charakteristisches Zeitmerkmal, das der Aktivierung der Hausautomatisierungseinrichtung in fortlaufender Reihenfolge zu Grunde liegt, registriert. Weiter umfasst das Verfahren einen Vorhersageschritt, der, durch die Überwachungseinheit ausgeführt, das Auftreten einer nächsten Aktivierung der Hausautomatisierungseinrichtung in fortlaufender Reihenfolge, ausgehend von den aufgenommenen charakteristischen Zeitmerkmalen vorhersagt.

Ausgehend von dem oben genannten Stand der Technik ist es somit Aufgabe der Erfindung, ein Steuerverfahren und eine Steuervorrichtung für Energieverbraucher eines Gebäudes vorzuschlagen, die eine flexible, selbst erlernende Steuerung vornehmen können, um insbesondere den Betrieb träger Energieverbraucher, die ihre Komfortleistung nicht auf Knopfdruck bereitstellen können, optimal an die Lebensgewohnheit und Nutzungsverhalten des Benutzers anzupassen.

Diese Aufgabe wird durch ein Steuerverfahren und eine Steuervorrichtung nach den unabhängigen Ansprüchen gelöst. Vorteilhafte Weiterbildungen der Erfindung sind Gegenstand der Unteransprüche.

### OFFENBARUNG DER ERFINDUNG

Erfindungsgemäß wird ein Energiesteuerverfahren zur Steuerung eines oder mehrerer Energieverbraucher innerhalb eines Gebäudes, insbesondere innerhalb eines Hauses, einer Wohnung oder einer Gewerbeeinrichtung unter Verwendung von historisierten Energieverbrauchswerten Ee innerhalb eines Energieverbrauchserfassungszeitraums Te zumindest eines Energieverbrauchszählers vorgeschlagen. Durch Analyse von Art und Verlauf der Energieverbrauchswerte Ee wird ein zukünftiger Energieverbrauch Emp des Energieverbrauchers prognostiziert. Der Energieverbraucher wird auf Basis des prognostizierten Energieverbrauchs Emp gesteuert, insbesondere aktiviert bzw. deaktiviert. Aus vergangenen Verbrauchsdaten werden Templates definiert, die eine gegenwärtig gerade vergangene Energieverbrauchssituation charakterisieren. In historischen Einträgen wird nach Situationen gesucht, die diesem Template möglichst gut entsprechen, um zu erwartende weitere Energieverbrauchshandlungen des Nutzers durch Korrelation mit historischen Verbrauchsprofilen vorhersagen zu können

Ein zukünftiger Energieverbrauch Emp innerhalb eines zukünftigen Prognosezeitraums Tmp, der Teil eines Betrachtungszeitraums Tm von <= 24 Stunden, bevorzugt <= 12 Stunden und insbesondere <= 6 Stunden ist, wird prognostiziert. Innerhalb des gesamten Energieerfassungszeitraums Te eines Energieverbrauchsverlaufs Ee werden ein oder mehrere vergangene Energieverbrauchszeitabschnitte Tto als Anfangsbereiche eines oder mehrerer Template-Verbrauchsprofile Tt gesucht, deren Verbrauchsverläufe Eto in Abhängigkeit von Randparametern wie Uhrzeit, Wochentag, Wetterbedingung, Kalenderdaten und/oder persönlichen Kalendereinträgen eine Korrelation mit einem gegenwärtig abgelaufenen Verbrauchsverlauf Emo innerhalb des Zeitbereichs Tmo des Betrachtungszeitraums Tm aufweisen. Für den kurzfristig zu erwartenden zukünftigen Verbrauch wird innerhalb des Prognosezeitraums Tmp ein Verlaufsprofil Emp auf Basis des oder der Energieverläufe Etp der den Energieverbrauchsabschnitten Tto nachfolgenden Energieverbrauchszeitabschnitte Ttp der Template-Verlaufsprofile Tt festgelegt, wobei eine Aktivierung/Deaktivierung des Energieverbrauchers auf Basis des Verbrauchsprofils Emp innerhalb des Prognosezeitraums Tmp erfolgt.

Der Energieverbrauch auf Haushaltsebene hängt sehr stark von individuellen Gegebenheiten ab (z.B. Ausrichtung einer Photovoltaik Anlage, Verhalten der Personen eines Haushalts). Trotz der Verschiedenheit zwischen den Haushalten beinhaltet die Verbrauchshistorie eines Haushalts oft wiederkehrende Muster. Somit wird zur Steuerung "träger" Energieverbraucher neben optionalen weiteren externen und nicht-Anlagen-spezifischen Daten (z.B. Wetterdaten, Energiepreisdaten) vorgeschlagen, die dem Haushalt eigenen historischen Verbrauchsdaten heranzuziehen. Diese Energieverbrauchsdaten werden von einem Energieverbrauchszähler, insbesondere Stromenergieverbrauchszähler, aber auch Gasvolumenzähler, Heizölzähler, Warmwasserzähler etc. bereitgestellt, die z.B. durch die Steuereinrichtung laufend protokolliert und somit historisiert werden. Dabei können zu dem Zeitpunkt, zu dem eine Prognose erstellt werden soll, vergangene Verbrauchs- und externe Daten, die die jetzige Situation gut charakterisieren, als Template bezeichnet werden. Es kann vorzugsweise in allen historischen Einträgen nach Situationen gesucht werden, die mit diesem Template möglichst gut übereinstimmen. Für die besten Übereinstimmungen werden die entsprechenden Verbräuche, die zeitlich im selben Verhältnis stehen, wie das Template zu dem prognostizierenden Zeitraum betrachtet, um mittels üblicher statistischer Verfahren die Prognose für den gewünschten Zeitraum zu berechnen. Hierbei kann angenommen werden, dass sich der Verbraucher ähnlich wie in vergangenen Energieverbrauchssituationen verhalten wird. Unter Berücksichtigung von Templates kann günstigerweise mit Hilfe eines statistischen Verfahrens ein vorliegendes Nutzerverhalten in die Zukunft prognostiziert werden, ohne dass vordefinierte Gebäudenutzerzustände, d.h. starre, "Templatevorgaben" definiert werden müssen. Ein Vorteil einer derart offenen und "adaptiven" Templatesuche liegt darin, dass beliebige Templates oder Anwendungsfälle des Nutzers identifizierbar sind und es keiner Einschränkung auf vorgegebene Gebäudenutzerzustände bedarf. Es ist auch keine Setup-Phase notwendig, in der überhaupt zuerst derartige Gebäudezustände definiert werden müssten.

Somit kann zu einem momentanen Zeitpunkt durch Betrachtung des gerade ablaufenden Energieverbrauchs zum einen auf das Nutzungsverhalten und die zu erwartenden weiteren Energieverbrauchshandlungen des Nutzer geschlossen werden, und zum anderen eine An- oder Abwesenheit des Benutzers festgestellt werden. So kann beispielsweise nach Feststellung einer Beleuchtungsaktivierung im Wohnzimmer morgens um 6.00 Uhr darauf geschlossen werden, dass in einem Zeitraum von 10 bis 15 Minuten später das Badezimmer auf einer Wunschtemperatur aufgeheizt und der Backofen vorgeheizt werden soll. Wird kein Energieverbrauch, insbesondere kein Beleuchtungsenergieverbrauch während Dunkelheitszeiten festgestellt, kann eine Beheizung von Räumen entfallen und die Temperatur der Wohnräume auf Niedertemperaturniveau abgesenkt werden. Da das individuelle Verhalten des Haushalts somit durch die eigene Historie beschrieben ist, wird ein Template genutzt. Das Template beschreibt charakteristisch die jetzige Situation und dem Template ähnliche vergangene Situation können genutzt werden, um eine entsprechende Prognose für die folgenden Verbräuche zu erstellen. Aus vergangenen Verbrauchsdaten werden Templates definiert, die eine gegenwärtig gerade vergangene Energieverbrauchssituation charakterisieren. In historischen Einträgen wird nach Situationen gesucht, die diesem Template möglichst gut entsprechen, um zu erwartende weitere Energieverbrauchshandlungen des Nutzers durch Korrelation mit historischen Verbrauchsprofilen vorhersagen zu können Zu einem gegebenen Zeitpunkt kann der zukünftig zu erwartende Energieverbrauch in einem Prognosezeitraum TmP bzw. das zukünftige Energieverbrauchsverhalten des Benutzers dadurch prognostiziert werden, dass das das kurz zuvor erkannte Verbrauchserverhalten Emo innerhalb eines Zeitraum Tmo mit Verbrauchsverläufen Ee im Energieverbrauchserfassungszeitraums Te verglichen wird. Werden identische oder hochgradig ähnliche Energieverbräuche Eto in Zeiträumen Tto gefunden, so kann mit hoher Wahrscheinlichkeit darauf geschlossen werden, dass in der zukünftigen Zeitspanne Tmp ein Energieverbrauch Emp stattfinden wird, der vergleichbar mit den Energieprofilen Etp der den Zeiträumen Tto unmittelbar anschließenden Zeiträumen Ttp stattfinden wird. Dabei können die Templatezeiträume Tt auch nach Randkriterien wie gleiche oder ähnliche Uhrzeit, gleiche oder ähnlicher Wochentag, Feiertag, Urlaubszeitraum etc. ausgewählt werden. Somit kann ein einfaches Prognoseverfahren vorgeschlagen werden, um das in naher Zukunft zu erwartende Verbrauchsverhalten des Benutzers vorher zu sagen, und die Energieverbraucher demgemäß zu steuern.

Die vorgeschlagene Steuermethode ist robust und kann auf beliebige Haushalte ohne Lernphase angewandt werden; es ist somit keine individuelle Kalibrierung und keine benutzerseitige Voreinstellungen nötig sein. Das Steuerverfahren ist selbst lernend, und die Prognosen verbessern sich, je mehr Energieverbrauchsdaten verfügbar sind, ohne einen neuen Lernzyklus starten zu müssen. Es ist vorteilhaft, bei einem Reset der Energiedaten oder einer Neuinstallation zunächst für den voreinstellbaren Energieverbrauchserfassungszeitraums Te keine Steuerungsaufgaben durchzuführen, sondern lediglich Energieverläufe zu protokollieren, um anschließend die Steuerung der Verbraucher zu übernehmen. Hierdurch ist eine vollautomatische sowie selbstlernende Ab- und Anwesenheitsprognose des Benutzers anhand von "elektronischen Fußspuren" im Gebäude geschaffen, die insbesondere in der Verbindung mit der Heizungssteuerung ein optimales Wohlfühlklima einstellen kann, und die eine überaus sparsame und effektive Beheizung ermöglicht. Das Steuerverfahren erlaubt eine automatische Adaption auf sich verändernde Rahmenbedingungen (z.B. Nutzerverhalten). Das Steuerverfahren eignet sich insbesondere für die Steuerung von Verbrauchern in Ein- und Mehrfamilienhäuser sowie Gewerbekomplexen gesamthaft oder auf Raumebene.

Gemäß einer vorteilhaften Weiterbildung kann der Energieverbraucher eine Heizungsregeleinrichtung zur selektiven Heizungsregelung zumindest einer Raum- oder Gebäudetemperatur, eine Klimaanlageneinrichtung zur selektiven Kühlungsregelung zumindest eines Raums oder eines Gebäudes, eine Verdunkelungssteuereinrichtung zur selektiven Verdunkelung zumindest eines Raums des Gebäudes, und/oder eine Lichtregelung zur selektiven Beleuchtung zumindest eines Raums des Gebäudes sein. Anhand historisierter Strommessungen ("elektronische Fußspuren") wird eine Prognose des Haushaltsstroms für die nächsten Stunden beispielsweise bis zu 6 Stunden durchgeführt, um das erwünschte Klimaverhalten der Räume vorherzubestimmen. Dabei kann es vorteilhaft sein, anhand historischer Energieverbrauchsdaten die Grundlast des Gebäudes zu bestimmen. Ist diese bestimmt, kann im Energieverbrauch Grundlastdaten abgezogen werden, beispielsweise der Grundverbrauch von Kühl- und Gefrierschränken, der Grundwärmebedarf für die Frostsicherung des Gebäudes oder ähnliches. Ausgehend von dem Grundlastverbrauch kann eine An- und Abwesenheitsprognose für den Haushalt errechnet werden, so dass eine Steuerung nur bei Anwesenheit eines Benutzers und eventuell auch benutzerspezifisch und verhaltensspezifisch durchgeführt werden. So können "Typtage" wie Wochenende, Feiertag, Arbeitstag, Home-Office Tag, Krankheitstag identifiziert werden, beispielsweise durch Zugriff auf Kalenderdaten bzw. persönlichen Kalender des Benutzers, um vorherzubestimmen, ob Verbraucher bzw. Heizung/Kühlung im Wohn-, Ess-, Arbeitsbereiche etc. aktiviert oder deaktiviert werden soll. Basierend auf der An-und Abwesenheit und der aktueller Stromaktivität im Haushalt werden die Heizungsregler oder auch Wärmeerzeugungseinheiten automatisch geregelt und geladen, dies ist insbesondere bei einer Stromspeicherheizung, die lange Vorlaufzeiten von mehreren Stunden benötigt, vorteilhaft, da hierdurch nur die benötigte Energiemenge bereitgestellt werden kann und Energiekosten gesenkt werden können.

Grundsätzlich ist das Steuerungsverfahren für alle Heizungssysteme geeignet, und unterstützt die Kosteneinsparung bei allen Wärmeerzeugungstechnologien wie Öl, Gas, Pellet, Strom und Wärmeverteilungssysteme wie Brauchwasserbereitstellung, Speicherbewirtschaftung, Radiatoren, Fußbodenheizung etc. Anstelle der Heizungsregelung kann auch eine Kühlregelung stattfinden, z.B. durch eine aktive Rollladensteuerung, aktive Kühlsysteme, Klimaanlage oder dergleichen. Durch eine Steuerung von Verschattungssystemen wie Rollladensteuerung und Markisen kann eine Sonnenerwärmung bzw. Verhinderung von Wärmeabstrahlung durch Fenster vorgenommen werden, um Raumklimaenergie effizient einzusetzen. Das Steuerverfahren ist modularisierbar und plattformunabhängig.

Gemäß einer vorteilhaften Weiterbildung kann die Steuerung des Energieverbrauchers durch ein Steuernetzwerk, insbesondere durch LAN, WLAN, Gebäudetechnik-Bussystem wie KNX, EIB, SPS oder dergleichen erfolgen. Somit können die Energieverbraucher, beispielsweise elektrische Thermostatventile, Rollladenantriebe oder Kühlluftregler aber auch Sensoren wie Temperaturfühler, Wettersensoren, Fensterkippsensoren etc. über ein Netzwerk adressierbar, beispielsweise über ein Gebäudebussystem, oder drahtlos über WLAN, Funk etc. an eine entsprechende Steuervorrichtung zur Steuerung angeschlossen sein, so dass Verkabelungsaufwand entfällt und die Steuerung einfach in eine bestehende Hausinstallation integriert werden kann.

Gemäß einer vorteilhaften Weiterbildung kann für die Steuerung des Energieverbrauchers ein Betriebsverlauf des Energieverbrauchers, Daten von Sensoren, insbesondere Fensterkippkontaktdaten, Zentral-Aus-Schalterdaten, Wind-, Sonnen- und Temperatursensordaten und/oder Energiepreisinformationsdaten eines Energieversorgers analysiert werden. So kann ein oder mehrere Energieverbrauchsmesser an einzelnen oder allen Energieverbraucher, insbesondere Lampen etc. angeordnet sein, so dass deren Energieverbrauch individuell bestimmt und somit auf das Benutzerverhalten geschlossen werden kann. Es ist auch denkbar, dass Steuerdaten eines Bussystems, die den Betriebszustand von Verbrauchern wie Leuchtmitteln, Heizungsanlagen etc. an eine Steuervorrichtung, die einer erfindungsgemäßes Steuerverfahren durchführt, gemeldet werden, so dass eine verfeinerte Erfassung des Benutzerverhaltens ermittelt und somit eine verbesserte individuelle Steuerung der Verbraucher erreicht werden kann. Stehen weitere Sensormessdaten, z.B. Fensterkippkontakte, Alles-aus-Schalter am Türeingang, etc. zur Verfügung, kann die Haushaltsstromprognose entsprechend zur Haushaltsaktivitätsprognose erweitert werden.

Gemäß einer vorteilhaften Weiterbildung kann der Energieverbrauchszähler ein intelligenter Zähler sein, die historisierten Energieverbrauchswerte können aus dem intelligenten Zähler ausgelesen oder von dem intelligenten Zähler aus einer zentralen Energieverbrauchsdatenbank eines Energieversorgers abgerufen werden, und die Energieverbrauchswerte können über einen Energieerfassungszeitraum Te von >= einer Woche analysiert werden. Die Energieverbrauchswerte können Stromenergieverbrauchswerte, Gasvolumenverbrauchswerte, Heizölverbrauchswerte, Pelletverbrauchswerte, Warmwasserverbrauchswerte, Temperaturverlaufswerte, Beleuchtungsverlaufswerte und/oder den Betriebszustand einzelner Stromverbraucher umfassen. Die Energieverbrauchswerte können mit einer Datenauflösung von <=20 Minuten, insbesondere <=15 Minuten aufgezeichnet werden. Die Energieverbrauchswerte können lokal aus einem intelligenten Zähler abgerufen oder beispielsweise aus einem Datennetzwerk, beispielsweise Internet von einem Energieversorger bezogen werden, der die Daten zur Tarifierung des Energieverbrauchs einsetzt. Somit können die ohnehin vorliegenden Daten zur verbesserten Energieverbrauchssteuerung verwendet werden. Eine hohe Datenerhebungsrate ist vorteilhaft, um sehr genaue Energieverbrauchsprognosen liefern zu können, so dass in Schaltzyklen <= 20 Minuten Energieverbraucher gesteuert werden können, um schnell und optimal zu reagieren.

Nach einer vorteilhaften Weiterentwicklung kann der intelligente Zähler Energieverbrauchsverläufe des zumindest einen individuellen Energieverbrauchers protokollieren. Die Protokollierung nicht nur des Gesamtenergieverbrauchs, sondern des individuelle Verbrauchsverhalten beispielsweise einzelner Beleuchtungskörper, Waschmaschine, Herd, Badheizung etc. kann genutzt werden, Energieverhaltensprognosen genauer zu erstellen und somit ein bedarfsgerechtes Benutzerverhalten prognostizieren zu können.

Nach einem nebengeordneten Aspekt der Erfindung wird eine Steuervorrichtung zur Steuerung eines oder mehrerer Energieverbraucher innerhalb eines Gebäudes vorgeschlagen, dass zur Durchführung eines vorgenannten Steuerverfahrens eingerichtet ist. Die Steuervorrichtung umfasst eine I/O-Zählerschnittstelle zu einem oder mehreren Energieverbrauchszählern, insbesondere intelligenten Zähler und eine I/O-Verbraucherschnittstelle zu einem oder mehreren Energieverbraucher. Weiterhin umfasst die Steuervorrichtung eine Prognoseeinrichtung zur Analyse historisierter Energieverbrauchswerte, die von der I/O-Zählerschnittstelle bereitgestellt wird, und zur Prognose eines zukünftigen Energieverbrauchs Emp umfasst. Des Weiteren umfasst die Steuervorrichtung eine Steuereinrichtung zur Steuerung des Energieverbrauchers auf Basis des prognostizierten Energieverbrauchs Emp Die I/O-Zählerschnittstelle kann die Energieverbrauchshistorie Ee im Energieverbrauchserfassungszeitraums Te auslesen bzw. ermöglicht einen Zugriff auf diese Daten. Die I/O-Verbraucherschnittstelle ermöglicht einen steuernden oder regelnden Eingriff in einzelne Verbraucher wie Heizungsventile, allerdings können auch Betriebszustände von Verbrauchern wie Beleuchtung etc. abgefragt werden. Die Steuereinrichtung ist eingerichtet, die Energieverbrauchswerte Ee zu analysieren und kann, beispielsweise unter Berücksichtigung von Kalenderdaten, Wetterdaten oder ähnliches die Verbraucher basierend auf dem bisherigen Energieverbrauchsprofil steuern. Die Prognoseeinrichtung umfasst eine Korrelationseinheit, die eingerichtet ist, eine Korrelation des aktuellen Energieverbrauchs Emo innerhalb einer zurückliegenden Zeitspanne Tmo des Betrachtungszeitraums Tm mit Energieverbrauchsverläufen Eto zurückliegender Zeitspannen Tto durchzuführen.

Die Korrelationseinheit ist eingerichtet, ein oder mehrere Template Verbrauchsprofile Tt zu identifizieren, deren Energieverlaufsabschnitte Eto innerhalb des Energieverbrauchsabschnitts Tto mit dem aktuellen Energieverbrauch Emo korrelieren, und das Energieverbrauchsprofil Epm wird auf Basis des oder der Energieverläufe Etp, die den Energieverbrauchsabschnitten Tto nachfolgenden Energieverbrauchszeitabschnitte Ttp zugeordnet sind, festgelegt.

Die Korrelationseinheit kann eingerichtet sein, Template-Energieprofile aufzufinden, so dass ein Benutzerenergieverbrauchsprofil abgeschätzt werden kann.

Die Korrelationseinheit ist ferner eingerichtet, für die Korrelation Randparameter wie Uhrzeit, Wochentag, Wetterbedingung, Kalenderdaten und/oder persönlichen Kalendereinträgen zu berücksichtigen.

Ist die Korrelationseinheit eingerichtet, neben der Energieverlaufskorrelation weitere Daten wie Kalenderdaten, Wetterdaten, Zustand von Fenstern oder eines Zentral-Aus-Schalter abzufragen, so können auch ein individuelles Verhalten des Benutzers bei der Steuerung berücksichtigt werden.

In einer vorteilhaften Weiterbildung kann die Steuervorrichtung eine I/O-Datenschnittstelle zum Empfang von Daten aus dem Internet, insbesondere Energiepreisdaten, Wetterdaten, persönliche Kalenderdaten eines Nutzers und/oder zum Empfang von Sensordaten, insbesondere Innentemperatursensordaten, Helligkeitssensordaten, Wettersensordaten, Fensterkontaktsensordaten, Zentral-AusSchalterdaten umfassen. Somit kann die Steuerungsvorrichtung andere benutzerspezifische Daten wie Urlaubszeiträume, Arbeitszeiträume, Wochenende, Abendveranstaltungen abfragen, so dass die Steuervorrichtung An- und Abwesenheitszeiträume sowie Bedarfsprofile aus Kalenderdaten berücksichtigen kann. Des Weiteren können Wetterdaten dazu dienen, einen erhöhten oder abgesenkten Energieverbrauch vorherzusehen, um z.B. Vorlaufzeiten für eine Heizung oder Klimaanlage zu bestimmen. Sind Fenster geöffnet bzw. geschlossen oder ein Zentral-Aus-Schalter betätigt, kann auf eine längere Abwesenheit bzw. Anwesenheit des Benutzers geschlossen werden.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Blockdiagramm eines Ausführungsbeispiels einer erfindungsgemäßen Steuervorrichtung;
- Fig. 2: ein Heizungsszenario einer Wohnung bei Anwendung eines Ausführungsbeispiels des erfindungsgemäßen Steuerverfahrens;
- Fig. 3: eine Energieverbrauchsdarstellung einer Wohnung zu verschiedenen Zeitpunkten für eine Anwendung eines Ausführungsbeispiels des erfindungsgemäßen Steuerverfahrens;
- Fig. 4: eine Energieverbrauchsdarstellung einer Wohnung an verschiedenen Typtagen für eine Anwendung eines Ausführungsbeispiels des erfindungsgemäßen Steuerverfahrens;
- Fig. 5: eine Visualisierung eines Energieverbrauchs Ee einer Wohnung über einen Energieverbrauchserfassungszeitraums Te als Grundlage einer Energieverbrauchsprognose eines Ausführungsbeispiels des erfindungsgemäßen Steuerverfahrens.

In den Figuren sind gleiche oder gleichartige Komponenten mit gleichen Bezugszeichen beziffert.

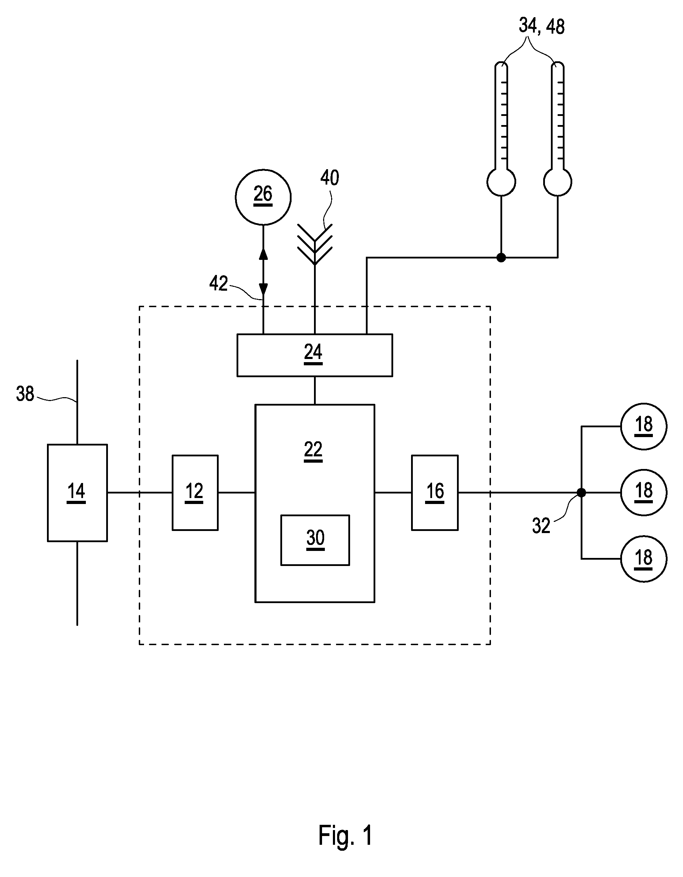

Das erfindungsgemäße Verbrauchersteuerverfahren zur Steuerung eines oder mehrerer Energieverbraucher innerhalb eines Gebäudes, insbesondere innerhalb eines Hauses, einer Wohnung oder einer Gewerbeeinrichtung unter Verwendung von historisierten Energieverbrauchswerten Ee innerhalb eines Energieverbrauchserfassungszeitraums Te zumindest eines Energieverbrauchszählers sieht vor, dass durch Analyse von Art und Verlauf der Energieverbrauchswerte Ee ein zukünftiger Energieverbrauch Emp des Energieverbrauchers prognostiziert wird. Der Energieverbraucher wird auf Basis des prognostizierten Energieverbrauchs Emp gesteuert, insbesondere aktiviert bzw. deaktiviert, wobei aus vergangenen Verbrauchsdaten Templates definiert werden, die eine gegenwärtig gerade vergangene Energieverbrauchssituation charakterisieren, und wobei in historischen Einträgen nach Situationen gesucht wird, die diesem Template möglichst gut entsprechen, um zu erwartende weitere Energieverbrauchshandlungen des Nutzers durch Korrelation mit historischen Verbrauchsprofilen vorherzusagen. In der Figur 1 ist schematisch ein Blockdiagramm eines Ausführungsbeispiels einer Steuervorrichtung 10 dargestellt.

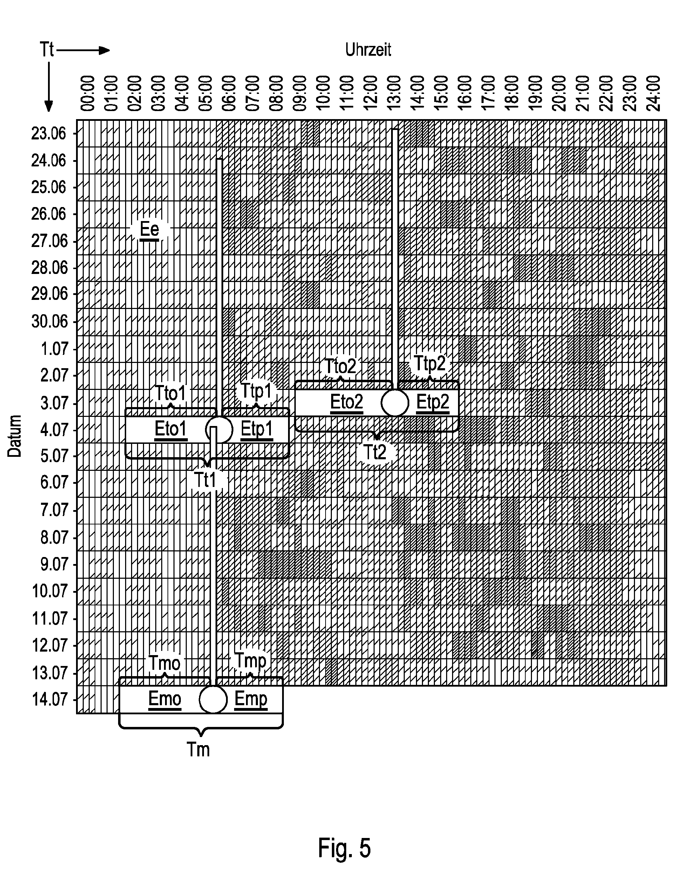

Die Steuervorrichtung 10 dient zur Steuerung einer Heizungsanlage eines Gebäudes 50, wobei einzelne Energieverbraucher 18 in Form von Heizungsventilen 48 gesteuert werden können. Die Steuervorrichtung 10 ist durch eine I/O Zählerschnittstelle 12 mit einem elektrischen Energieverbrauchszähler 14 verbunden, der den Gesamtstrom der Energieleitung 38 zur Versorgung der Wohnung 50 misst. In der Steuervorrichtung 10 ist eine Steuereinrichtung 22 umfasst, die den Stromverlauf mit Zeitstempel historisiert, d.h. in einem Speicher ablegt, wobei sich ein Energieverbrauch-/Zeitverlaufsdiagramm ähnlich wie in Figur 5 ergibt. Die Steuereinrichtung 22 ist des Weiteren über eine I/O-Verbrauchsschnittstelle 16 mit einem Verbraucher-Steuernetzwerk 32 verbunden, wodurch einzelne Verbraucher 18, in diesem Fall Heizungsventile 48 geöffnet und geschlossen werden können.

Zur Regelung kann die Steuereinrichtung 22 über eine I/O-Datenschnittstelle 24 die gegenwärtigen Raumtemperaturen als Sensordaten 28 durch Temperaturfühler 48 als Gebäudesensoren 34 abfragen. Hiermit ist eine Raumtemperaturregelung möglich. Weitere Daten wie Wetterdaten, Kalenderdaten, Strompreisdaten sind über die I/O-Datenschnittstelle 24 aus dem Internet 26 abrufbar, auch können Energieverlaufsdaten Ee von einem Datenserver eines Energieversorgungsunternehmens abgefragt werden. Somit ist denkbar, die Kopplung zu dem Energieverbrauchszähler 14 lediglich indirekt herzustellen, da die vom Zähler 14 gemessenen Energieverbrauchsdaten mittelbar über den Datenserver des Energieversorgers statt über die I/O-Zählerschnittstelle 12 abrufbar sind.

Die Steuereinrichtung 22 umfasst eine Korrelationseinheit 48, die ausgelegt ist, aus den historisierten Energieverlaufsdaten Ee eine Prognose eines weiteren Energieverbrauchs bzw. eines Temperaturverlaufs 48 zu ermitteln, wobei bei Anwesenheit eines Benutzers, die beispielsweise aus dem aktuellen Energieverbrauch erkennbar ist, und unter Berücksichtigung von Uhrzeit, Wochentag und personenbezogenen Kalendereinträgen (Urlaub/Arbeitstag/Krankheitstag etc.) ein gewünschter Temperaturverlauf 48 der Wohnungsräume 52 prognostizierbar ist. Dementsprechend kann die Steuereinrichtung 22 die Heizungsventile 46 in den verschiedenen Räumen 52 derart regeln, dass eine Wohlfühltemperatur für den Benutzer bereitgestellt werden kann.

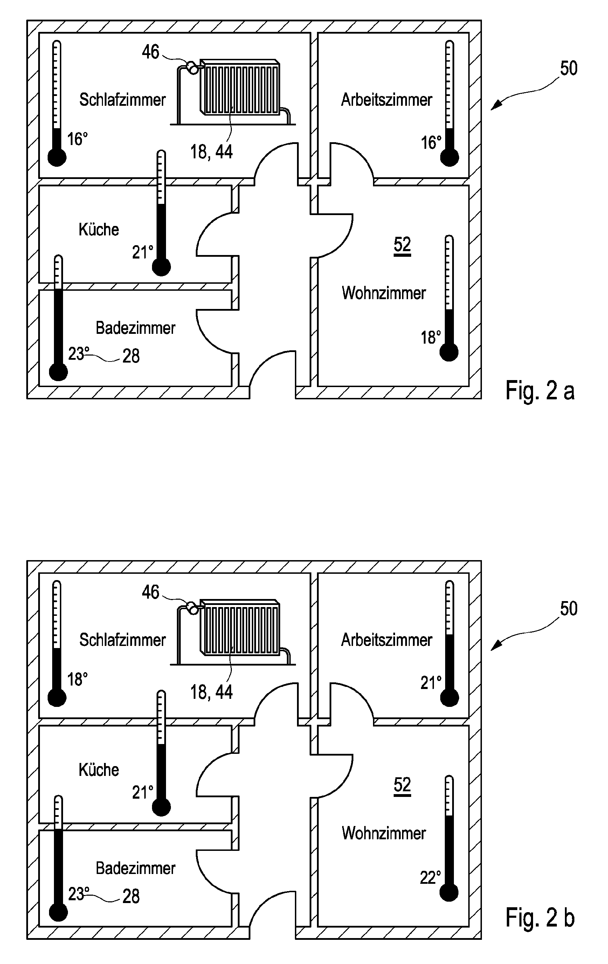

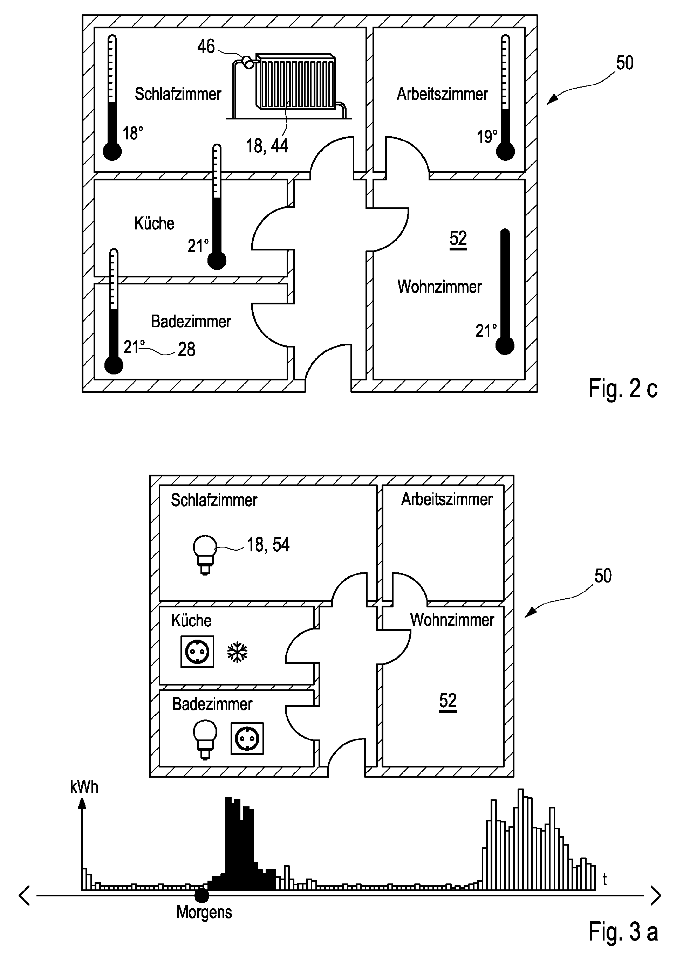

In den Figuren. 2a bis 2c sind Raumtemperaturszenarien für verschiedene Räume 52 eines Gebäudes 50 an einem Wochenende dargestellt. Figur 2a zeigt die Temperaturverteilung an einem frühen Vormittag, wobei sowohl Küche als auch Badezimmer wohltemperiert sind und Arbeits-/ Wohn- und Schlafzimmer niedrig temperiert sind. Figur2b zeigt die Temperaturverteilung mittags, wobei sowohl Arbeitsais auch Wohnzimmer höher temperiert sind, damit diese parallel genutzt werden können. In den frühen Abendstunden sind die Temperaturen nach Figur 2c im Arbeitszimmer und im Bad leicht abgesenkt, und in der Küche und im Wohnzimmer auf 21 ° gehalten. Die Temperaturverläufe 48 können vom Benutzer in eine Steuervorrichtung 10 für jeden Wochentag oder Typtage wie Werktag/Wochenende/ Urlaub /Krankheitstag / Home-Office-Tag etc. eingegeben werden, oder durch Temperatursensoren 34 erfasst werden. Durch einen vorliegenden Energieverbrauch kann erkannt werden, ob sich eine Person in der Wohnung 50 aufhält oder nicht, so dass das Temperaturszenario 48 abhängig von Wochentag und Uhrzeit eingestellt werden kann, oder die Temperaturen bei längerer Abwesenheit auf Energiesparniveau von 16° C abgesenkt werden können. Durch Analyse eines typischen Beleuchtungsszenarios kann erkannt werden, ob sich ein Benutzer vorwiegend im Bad, im Arbeitszimmer, Wohnzimmer oder Küche aufhält, und bei vergleichbaren Energie- bzw. Beleuchtungsaktivitäten können die Raumtemperaturen 48 entsprechend eingestellt werden.

In dem Gebäude 50 dient ein Smart Meter 14 zur Strommessung und kann durch eine Steuervorrichtung automatisch Heizungsventilregler 46 regeln. Verlässt der Benutzer das Gebäude 50 und ist seine prognostizierte Abwesenheit lang genug, wird die Raumtemperatur 48 automatisch mittels der automatischen Heizungsregler 46 abgesenkt. Entsprechend der prognostizierten Wiederankunft im Gebäude 50, benutzerspezifischen Temperaturkomfortwert, Umweltfaktoren (Sonne und Wind) und Latenz zur Erwärmung des Hauses wird das Gebäude 50 ausreichend lange vor der Ankunft des Benutzers wieder aufgeheizt. Nachts wird entsprechend des Nutzerhaltens die Temperatur 48 heruntergeregelt (automatische Nachtabsenkung). Das Steuerverfahren kann aus dem Nutzerverhalten (An- & Abwesenheitszeiten), neue Energieverbrauchsszenarien erlernen, z.B. ein "regelmäßiges Aufwachen" des Bewohners, Urlaubszeiten etc. und sich aufgrund des benutzerspezifischen Energieversorgungsprofils an dessen Gewohnheiten anpassen. Ein Benutzer kann eine Gruppe von Personen als Bewohner des Gebäudes umfassen. Es tritt kein Überheizen der Räume 52 bzw. des Gebäudes 50 und die Heizkosten können effektiv gesenkt werden.

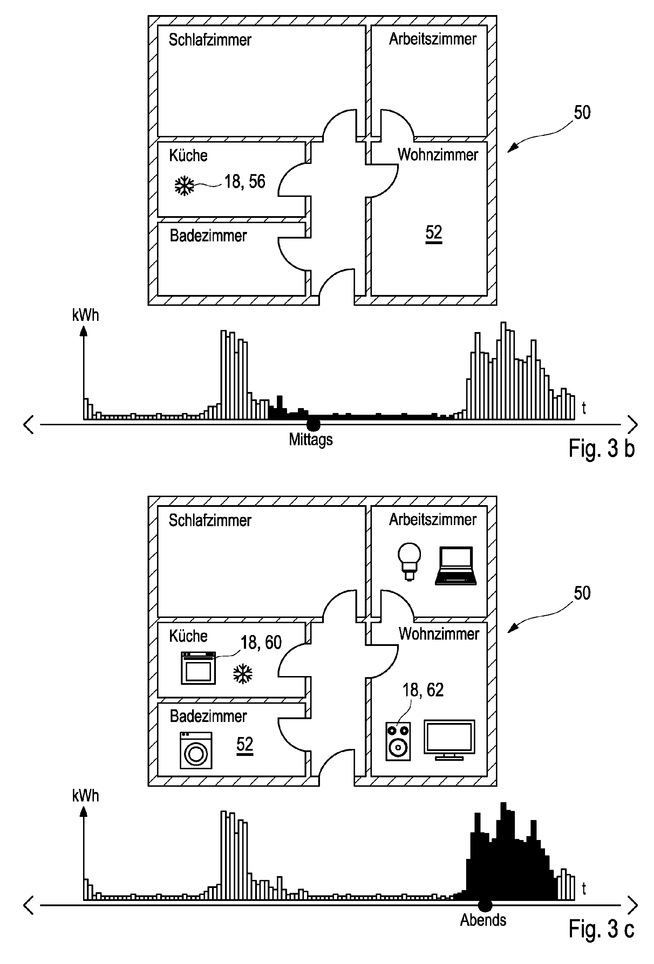

In den Figuren 3a bis 3c sind Stromenergieverbrauchsverläufe für eine Uhrzeit von 6:00 Uhr, 12:00 Uhr und 19:00 Uhr an einem typischen Werktag dargestellt, wobei die im Energieverbrauchsdiagramm hervorgehobenen Bereiche den Energieverbrauch am Vormittag, Mittag und Nachmittag charakterisieren. Am Vormittag nach Figur 3a ist die Beleuchtung 54 als elektrischer Verbraucher im Schlafzimmer und Bad aktiviert, und in der Küche ist ein Energieverbrauch durch einen Kühlschrank registrierbar. In Bad und Küche entnimmt ein elektrisches Gerät Strom aus der Steckdose. Zur Mittagszeit nach Figur 3b ist - da niemand in der Wohnung ist - lediglich der Stromverbrauch des Kühlschranks messbar. Am Abend nach Figur 3c ist sowohl der Herd in der Küche, als auch die Waschmaschine im Bad, die Unterhaltungselektronik im Wohnzimmer und die Beleuchtung und der Computer im Arbeitszimmer aktiv. Eine Steuervorrichtung 10 kann den Energieverbrauch spezifisch nach dem Art des Verbrauchs (Steckdose, Licht, Heizung) für jeden einzelnen Raum protokollieren, und an vergleichbaren Werktagen die Raumtemperatur entsprechend den Aktivitäten des Benutzers regeln, und - sofern erwünscht -den Backofen abends vorheizen und die Waschmaschine in Betrieb setzen.

Der Grundbedarf der Wohnung 50 wird insbesondere von dem Kühlschrankverbrauch und einem Stromverbrauch für die Heizungsanlage dominiert. Durch Subtraktion des Grundbedarfs kann ein verfeinertes Lastprofil bereitgestellt werden, dass auf Benutzeraktivität untersucht werden kann, um einen zukünftigen Energieverbrauch zu prognostizieren.

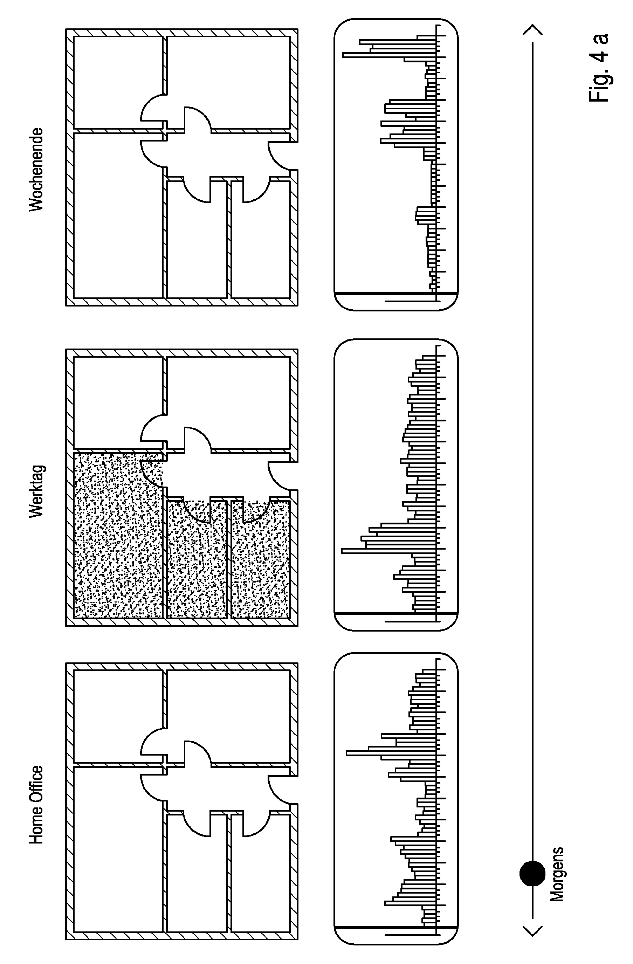

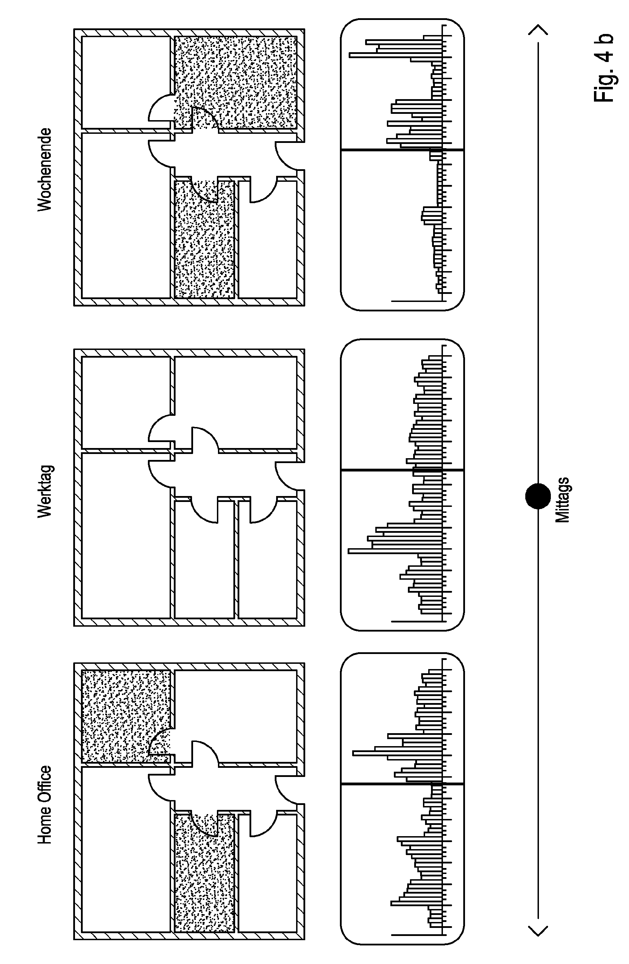

In der Figur 4 sind für drei Typtage, d.h. typische Benutzerprofile "Home-Office", "Werktag" und "Wochenende" zu zwei Zeitpunkten morgens um 06:00 Uhr nach Figur 4a und nachmittags um 12:00 Uhr nach Figur 4b als typische Energieverlaufsprofile dargestellt. Während beim Home-Office Typetag ganztägig ein Energieverbrauch feststellbar ist, wobei sich Spitzen am Vormittag und am Nachmittag ergeben, ist an einem typischen Werktag Vormittags ein hohes Lastprofil erkennbar, und am Wochenende treten Lastspitzen am Nachmittag und abends auf.

In der Figur 4a morgens um 06:00 Uhr ist an einem Home-Office Typtag erkennbar, dass keine Heizung erforderlich ist, und kein Stromverbrauch benötigt wird, da der Benutzer seinen Home-Office Tag erst später beginnt, gleiches gilt für den Wochenend-Typtag. An einem typischen Werktag hingegen ist erforderlich, zu diesem Zeitpunkt Schlafzimmer, Bad und Küche auf eine erhöhte Temperatur zu beheizen.

In der Figur 4b mittags um 12:00 Uhr ist an einem Home-Office Typtag eine Beheizung von Küche und Arbeitszimmer erforderlich. Die übrigen Räume 52 der Wohnung 50 werden nicht beheizt. Während eines Werktags ist keine Beheizung erforderlich. Am Wochenende wird über die Mittagszeit eine Beheizung von Küche und Wohnzimmer vorgenommen. Die Typtag-Heizungsprofile können durch Analyse historisierter Energieverbrauchsdaten selbsttätig identifiziert werden, so dass die zu steuernden Energieverbraucher automatisch aktiviert bzw. deaktiviert werden.

In der Figur 5 ist dreidimensional eine Darstellung des Verbrauchs Ee über einen Energieverbrauchserfassungszeitraums Te (in Uhrzeit als Abszisse und Tagen als Ordinate) dargestellt, wobei ein Ausführungsbeispiel einer Prognoseerstellung für einen zu erwartenden Energieverbrauch Emp innerhalb eines Analysezeitraums Tm veranschaulicht werden soll. Die Uhrzeit ist horizontal und das Datum ist vertikal aufgetragen. Pro 15 Minuten erfolgt eine Messung des Stromverbrauchs. Helle Punkte bedeuten niedrigere Verbräuche. Dunklere Punkte bedeuten höhere Verbräuche. Z.B. sind die niedrigeren nächtlichen Verbräuche des Haushalts 50 durch die hellen Punkte im linken Viertel zu erkennen. An einem gegebenen Zeitpunkt (14.07. 05:30 Uhr) die dem hellen Punkt entspricht, sollen in dem folgenden Zeitraum von 05:30 Uhr bis 08:30 Uhr (hellgrauer Balken) ein zu erwartender Energieverbrauch Emp, beispielsweise an Heizenergie prognostiziert werden. In dem Gesamtenergieverbrauchsdiagramm Ee werden nun Zeitbereiche Tto gesucht, deren Energieverläufe Eto dem Energieverbrauch Emo des gerade vergangenen Zeitraums Tmo im Zeitbereich 14.07 von 01:30 bis 05:30 Uhr entspricht (dunkelgrauer Balken). In diesem Beispiel wurden zwei Bereiche Tto1 am 04.07 von 02:00 bis 06:00 Uhr und vom 03.07 von 09:00 bis 13:00 als hochgradig ähnlich bzw. identisch erkannt. Daraufhin wurde die nachfolgenden Energieprofile Etp1 im Zeitbereich Ttp1 04.07 von 06:00 bis 09:00 des ersten Templatebereichs Tt1 und Etp2 im Zeitbereich Ttp2 am 03.07. von 13:00 bis 16:00 Uhr des Templatebereichs Tt2 erkannt. Diese Energieprofile Etp1 und Etp2 können gemittelt als prognostizierter Heizenergieverlauf Emp von dem Steuerverfahren bestimmt werden. Die Prognose kann mit üblichen statistischen Daten, z.B. Gaußsches Fehlerquadrat oder ähnlichen Korrelationsverfahren aufgefunden werden. Somit kann eine Prognose für den hellgrauen Balken im Zeitbereich Tmp mit den üblichen statistischen Verfahren basierend auf allen dunkelgrauen Balken Ttp1 und Ttp2 gebildet werden und die Heizungsventile dementsprechend gesteuert werden, um die prognostizierte Heizenergie abzugeben. In der Regel können mehr als zwei Template-Lastprofile Tt1 und Tt2 gewählt werden, wobei ein Mittelwert der Template-Energieprofile Etp1 und Etp2 für den Prognoseverbrauch Emp gewählt werden kann.

Der Energieverlauf kann für die gesamte Wohnung 50 oder nur für einzelne Räume 52 betrachtet werden. Statt einem Energieverbrauch kann ein Temperaturverlauf, eine Beleuchtungsintensität oder andere mit dem Energieverbrauch korrelierende Werte herangezogen werden. Die Erfindung ermöglicht eine effektive und selbstadaptive Steuerung von Energieverbrauchern, insbesondere einer Gebäudeheizung, Klimaanlage, Abschattungssystem, senkt Gebäudebetriebskosten und erhöht die Lebensqualität des Benutzers in dem Gebäude.

## Patentansprüche

1. Verbrauchersteuerverfahren zur Steuerung eines oder mehrerer Energieverbraucher (18) innerhalb eines Gebäudes (50), insbesondere innerhalb eines Hauses, einer Wohnung oder einer Gewerbeeinrichtung unter Verwendung von historisierten Energieverbrauchswerten (Ee) innerhalb eines Energieverbrauchserfassungszeitraums (Te) zumindest eines Energieverbrauchszählers (14), wobei durch Analyse von Art und Verlauf der Energieverbrauchswerte (Ee) ein zukünftiger Energieverbrauch (Emp) des Energieverbrauchers (18) prognostiziert wird, und der Energieverbraucher (18) auf Basis des prognostizierten Energieverbrauchs (Emp) gesteuert, insbesondere aktiviert bzw. deaktiviert werden, wobei aus vergangenen Verbrauchsdaten Templates definiert werden, die eine gegenwärtig gerade vergangene Energieverbrauchssituation charakterisieren, und wobei in historischen Einträgen nach Situationen gesucht wird, die diesem Template möglichst gut entsprechen, um zu erwartende weitere Energieverbrauchshandlungen des Nutzers durch Korrelation mit historischen Verbrauchsprofilen vorherzusagen,
**dadurch gekennzeichnet, dass**
ein zukünftiger Energieverbrauch (Emp) innerhalb eines zukünftigen Prognosezeitraums (Tmp), der Teil eines Betrachtungszeitraums (Tm) von weniger oder gleich 24 Stunden, bevorzugt weniger oder gleich 12 Stunden und insbesondere weniger oder gleich 6 Stunden ist, prognostiziert wird, wobei innerhalb des gesamten Energieerfassungszeitraums (Te) eines Energieverbrauchsverlaufs (Ee) ein oder mehrere vergangene Energieverbrauchszeitabschnitte (Tto) als Anfangsbereiche eines oder mehrerer Template-Verbrauchsprofile (Tt) gesucht werden, deren Verbrauchsverläufe (Eto) in Abhängigkeit von Randparametern wie Uhrzeit, Wochentag, Wetterbedingung, Kalenderdaten und/oder persönlichen Kalendereinträgen eine Korrelation mit einem gegenwärtig abgelaufenen Verbrauchsverlauf (Emo) innerhalb des Zeitbereichs (Tmo) des Betrachtungszeitraums (Tm) aufweisen, so dass für den kurzfristig zu erwartenden zukünftigen Verbrauch innerhalb des Prognosezeitraums (Tmp) ein Verlaufsprofil (Emp) auf Basis des oder der Energieverläufe (Etp) der den Energieverbrauchsabschnitten (Tto) nachfolgenden Energieverbrauchszeitabschnitte (Ttp) der Template-Verlaufsprofile (Tt) festgelegt wird, wobei eine Aktivierung/Deaktivierung des Energieverbrauchers (18) auf Basis des Verbrauchsprofils (Emp) innerhalb des Prognosezeitraums (Tmp) erfolgt.

2. Steuerverfahren nach Anspruch 1, wobei der Energieverbraucher (18) eine Heizungsregeleinrichtung zur selektiven Heizungsregelung zumindest einer Raum- oder Gebäudetemperatur (48), eine Klimaanlageneinrichtung zur selektiven Kühlungsregelung zumindest eines Raums (52) oder eines Gebäudes (50), eine Verdunkelungssteuereinrichtung zur selektiven Verdunkelung zumindest eines Raums (52) des Gebäudes (50), und/oder eine Lichtregelung zur selektiven Beleuchtung zumindest eines Raums (52) des Gebäudes (50) ist.

3. Steuerverfahren nach einem der vorgenannten Ansprüche, wobei die Steuerung des Energieverbrauchers (18) durch ein Steuernetzwerk (32), insbesondere durch LAN, WLAN, Gebäudetechnik-Bussystem wie KNX, EIB, SPS oder dergleichen erfolgt.

4. Steuerverfahren nach einem der vorgenannten Ansprüche, wobei zur Steuerung des Energieverbrauchers (18) ein Energieverbrauchsverlauf des Energieverbrauchers (18), Daten von Sensoren (34), insbesondere Fensterkippkontaktdaten, Zentral-Aus-Schalterdaten, Wind-, Sonnen- und Temperatursensordaten und/oder Energiepreisinformationsdaten eines Energieversorgers analysiert werden.

5. Steuerverfahren nach einem der vorgenannten Ansprüche, wobei der Energieverbrauchszähler (18) ein intelligenter Zähler ist, die historisierten Energieverbrauchswerte aus dem intelligenten Zahler ausgelesen oder von dem intelligenten Zähler aus einer zentralen Energieverbrauchsdatenbank eines Energieversorgers abgerufen werden, und die Energieverbrauchswerte über einen Energieerfassungszeitraum Te von >= einer Woche, analysiert werden, wobei die Energieverbrauchswerte Stromenergieverbrauchswerte, Gasvolumenverbrauchswerte, Heizölverbrauchswerte, Pelletverbrauchswerte, Warmwasserverbrauchswerte, Temperaturverlaufswerte, Beleuchtungsverlaufswerte und/oder den Betriebszustand einzelner Stromverbraucher (18) umfasst, und die Energieverbrauchswerte mit einer Datenauflösung von <=20 Minuten, insbesondere <=15 Minuten aufgezeichnet werden.

6. Steuerverfahren nach Anspruch 5, wobei der intelligente Zähler Energieverbrauchsverläufe des zumindest einen individuellen Energieverbrauchers (18) protokolliert.

7. Steuervorrichtung (10) zur Steuerung eines oder mehrerer Energieverbraucher (18) innerhalb eines Gebäudes (50), eingerichtet zur Durchführung eines Steuerverfahrens nach einem der vorgenannten Ansprüche, wobei die Steuervorrichtung (10) eine I/O-Zählerschnittstelle (12) zu einem oder mehreren Energieverbrauchszählern (14), insbesondere intelligenten Zählern und eine I/O-Verbraucherschnittstelle (16) zu einem oder mehreren Energieverbrauchern (18) umfasst, eine Prognoseeinrichtung (20) zur Analyse historisierter Energieverbrauchswerte, die von der I/O-Zählerschnittstelle (12) bereitgestellt wird, und zur Prognose eines zukünftigen Energieverbrauchs (Emp) umfasst, und eine Steuereinrichtung (22) zur Steuerung des Energieverbrauchers (18) auf Basis des prognostizierten Energieverbrauchs (Emp) umfasst, wobei die Prognoseeinrichtung eine Korrelationseinheit (30) umfasst, die eingerichtet ist, eine Korrelation des aktuellen Energieverbrauchs (Emo) innerhalb einer zurückliegenden Zeitspanne (Tmo) des Betrachtungszeitraums (Tm) mit Energieverbrauchsverläufen (Eto) zurückliegender Zeitspannen (Tto) durchzuführen,
wobei die Korrelationseinheit (30) so eingerichtet ist, dass ein oder mehrere Template Verbrauchsprofile (Tt) identifiziert werden, deren Energieverlaufsabschnitte (Eto) innerhalb des Energieverbrauchszeitabschnitts (Tto) mit dem aktuellen Energieverbrauch (Emo) korrelieren, und das Energieverbrauchsprofil (Epm) auf Basis des oder der Energieverläufe (Etp), die den Energieverbrauchsabschnitten (Tto) nachfolgenden Energieverbrauchszeitabschnitte (Ttp) zugeordnet sind, festgelegt wird und
wobei die Korrelationseinheit (30) eingerichtet ist, für die Korrelation Randparameter wie Uhrzeit, Wochentag, Wetterbedingung, Kalenderdaten und/oder persönlichen Kalendereinträgen zu berücksichtigen.

8. Steuervorrichtung nach Anspruch 7, wobei die Steuervorrichtung (10) des Weiteren ein I/O-Datenschnittstelle (24) zum Empfang von Daten aus dem Internet (26), insbesondere Energiepreisdaten, Wetterdaten, persönliche Kalenderdaten eines Nutzers und/oder zum Empfang von Sensordaten (28), insbesondere Innentemperatursensordaten, Helligkeitssensordaten, Wettersensordaten, Fensterkontaktsensordaten, Zentral-Aus-Schalterdaten umfasst.

## Claims

1. Consumer control method for controlling one or more energy consumers (18) inside a building (50), in particular inside a house, apartment or commercial property using historicized energy consumption values (Ee) within an energy consumption recording period (Te) of at least one energy consumption meter (14), where a future energy consumption (Emp) of the energy consumer (18) is forecast by analysing the type and profile of the energy consumption values (Ee), and the energy consumer (18) is controlled, in particular activated or deactivated, on the basis of the forecast energy consumption (Emp), where templates are defined from past consumption data that characterize a currently just-past energy consumption situation, and where a search is conducted in historic entries for situations matching this template as closely as possible, in order to predict expected further energy consumption actions by the user by correlation with historic consumption profiles,
**characterized in that**
a future energy consumption (Emp) within a future forecast period (Tmp), which is part of an observation period (Tm) of less than or equal to 24 hours, preferably less than or equal to 12 hours and in particular less than or equal to 6 hours, is forecast, where within the entire energy recording period (Te) of an energy consumption curve (Ee) one or more past energy consumption time phases (Tto) are searched for as initial ranges of one or more template consumption profiles (Tt) whose consumption curves (Eto) exhibit, depending on boundary parameters such as clock time, weekday, weather conditions, calendar data and/or personal calendar entries, a correlation with a currently expired consumption curve (Emo) within the time range (Tmo) of the observation period (Tm), such that for the future consumption to be expected in the short term within the forecast period (Tmp), a consumption profile (Emp) is stipulated on the basis of the energy curve(s) (Etp) of the energy consumption time phases (Ttp) of the template consumption profiles (Tt) that follow the energy consumption phases (Tto), where activation/deactivation of the energy consumer (18) takes place on the basis of the consumption profile (Emp) within the forecast period (Tmp).

2. Control method according to claim 1, where the energy consumer (18) is a heating control unit for selective heating control of at least one room or building temperature (48), an air-conditioning unit for selective cooling control of at least one room (52) or building (50), a darkening control unit for selective darkening of at least one room (52) of the building (50), and/or a light control for selective lighting of at least one room (52) of the building (50).

3. Control method according to one of the preceding claims, where the energy consumer (18) is controlled by a control network (32), in particular by LAN, WLAN, a building services bus system such as KNX, EIB, SPS or the like.

4. Control method according to one of the preceding claims, where for control of the energy consumer (18) an energy consumption curve of the energy consumer (18), data from sensors (34), in particular window tilt contact data, central off-switch data, wind, solar and temperature sensor data and/or energy price information data of an energy supplier are analysed.

5. Control method according to one of the preceding claims, where the energy consumption meter (18) is an intelligent meter, the historicized energy consumption values are output from the intelligent meter or accessed by the intelligent meter from a central energy consumption database of an energy supplier, and the energy consumption values are analysed over an energy recording period Te of >= one week, where the energy consumption values comprise electric energy consumption values, gas volume consumption values, heating oil consumption values, pellet consumption values, hot water consumption values, temperature curve values, lighting curve values and/or the operating states of individual electric power consumers (18), and where the energy consumption values are recorded with a data resolution of <=20 minutes, in particular <=15 minutes.

6. Control method according to claim 5, where the intelligent meter records energy consumption curves of the at least one individual energy consumer (18).

7. Control device (10) for controlling one or more energy consumers (18) inside a building (50), set up for implementation of a control method according to one of the preceding claims, where said control device (10) comprises an I/O meter interface (12) to one or more energy consumption meters (14), in particular intelligent meters, and an I/O consumer interface (16) to one or more energy consumers (18), a forecasting unit (20) provided for analysing historicized energy consumption values provided by the I/O meter interface (12) and for forecasting a future energy consumption (Emp), and a control unit (22) for controlling the energy consumer (18) on the basis of the forecast energy consumption (Emp), where the forecasting unit comprises a correlation unit (30) set up to perform a correlation of the current energy consumption (Emo) within a past time range (Tmo) of the observation period (Tm) with energy consumption curves (Eto) of past time ranges (Tto),
where the correlation unit (30) is set up such that one or more template consumption profiles (Tt) are identified, whose energy curve phases (Eto) within the energy consumption time phase (Tto) correlate with the current energy consumption (Emo), and the energy consumption profile (Emp) is stipulated on the basis of the energy curve(s) (Etp) assigned to the energy consumption time phases (Ttp) following the energy consumption phases (Tto), and
where the correlation unit (30) is set up to take into account for the correlation boundary parameters such as clock time, weekday, weather conditions, calendar data and/or personal calendar entries.

8. Control device according to claim 7, where said control device (10) furthermore comprises an I/O data interface (24) for receiving data from the internet (26), in particular energy price data, weather data, personal calendar data of a user, and/or for receiving sensor data (28), in particular inside temperature sensor data, brightness sensor data, weather sensor data, window contact sensor data and central off-switch data.

## Revendications

1. Procédé de commande de consommateurs destiné à commander un ou plusieurs consommateur(s) d'énergie (18) à l'intérieur d'un bâtiment (50), en particulier à l'intérieur d'une maison, d'un appartement ou d'une installation à usage professionnel, en utilisant des valeurs de consommation d'énergie (Ee) historisées pendant une période de saisie de consommation d'énergie (Te) d'au moins un compteur de consommation d'énergie (14), procédé dans lequel par analyse de la nature et de l'allure des valeurs de consommation d'énergie (Ee) est pronostiquée une consommation d'énergie (Emp) future du consommateur d'énergie (18), et le consommateur d'énergie (18) est commandé sur la base de la consommation d'énergie (Emp) pronostiquée, est en particulier activé ou désactivé, sachant qu'à partir de données de consommation antérieures sont définis des modèles qui caractérisent une situation de consommation d'énergie qui vient juste de prendre fin, et que dans des enregistrements historiques sont recherchées des situations correspondant le mieux possible audit modèle, afin de prévoir d'autres actes de consommation d'énergie auxquels il faut s'attendre de la part de l'utilisateur par corrélation avec des profils de consommation historiques,
**caractérisé en ce**
**qu'**une consommation d'énergie (Emp) future est pronostiquée dans une période de pronostic (Tmp) future, qui est une partie d'une période d'observation (Tm) inférieure ou égale à 24 heures, de préférence inférieure ou égale à 12 heures et en particulier inférieure ou égale à 6 heures, sachant que dans la totalité de la période de saisie d'énergie (Te) d'une courbe de consommation d'énergie (Ee) est/sont recherchée(s) une ou plusieurs période(s) de consommation d'énergie antérieures (Tto) en tant que débuts d'un ou plusieurs profil(s) de consommation modèle(s) (Tt), dont les courbes de consommation (Eto) en fonction de paramètres secondaires tels que l'heure, le jour de la semaine, les conditions météorologiques, les dates calendaires et/ou des notes personnelles dans le calendrier, présentent une corrélation avec une courbe de consommation (Emo) à présent écoulée dans la plage de temps (Tmo) de la période d'observation (Tm), si bien que pour la consommation future à laquelle il faut s'attendre à court terme dans la période de pronostic (Tmp), un profil de courbe (Emp) est déterminé sur la base de la ou des courbe(s) d'énergie (Etp) des périodes de consommation d'énergie (Ttp) succédant aux tranches de consommation d'énergie (Tto) des profils de courbe modèles (Tt), sachant qu'une activation/désactivation du consommateur d'énergie (18) a lieu sur la base du profil de consommation (Emp) dans la période de pronostic (Tmp).

2. Procédé de commande selon la revendication 1, dans lequel le consommateur d'énergie (18) est un dispositif de régulation du chauffage pour une régulation sélective de la température (48) d'au moins une pièce ou un bâtiment, une installation de climatisation pour une régulation sélective du refroidissement d'au moins une pièce (52) ou un bâtiment (50), un dispositif de commande d'obscurcissement pour un obscurcissement sélectif d'au moins une pièce (52) du bâtiment (50), et/ou un appareil de régulation de la lumière pour un éclairage sélectif d'au moins une pièce (52) du bâtiment (50).

3. Procédé de commande selon l'une des revendications précédentes, dans lequel la commande du consommateur d'énergie (18) est assurée par un réseau pilote (32), en particulier par LAN, WLAN, système de bus domotique tel que KNX, EIB, SPS ou similaire.

4. Procédé de commande selon l'une des revendications précédentes, dans lequel pour commander le consommateur d'énergie (18) sont analysés une courbe de consommation d'énergie du consommateur d'énergie (18), des données de capteurs (34), en particulier des données de contacts d'entrebâillement de fenêtre, des données d'interrupteurs centraux, des données de capteurs de vent, de capteurs solaires et de température et/ou des données d'information sur le prix de l'énergie d'un fournisseur d'énergie.

5. Procédé de commande selon l'une des revendications précédentes, dans lequel le compteur de consommation d'énergie (18) est un compteur intelligent, les valeurs historisées de consommation d'énergie sont lues dans le compteur intelligent ou sont extraites par le compteur intelligent d'une base centrale de données de consommation d'énergie d'un fournisseur d'énergie, et les valeurs de consommation d'énergie sont analysées sur une période de saisie d'énergie Te >= à une semaine, sachant que les valeurs de consommation d'énergie comprennent des valeurs de consommation d'énergie électrique, des valeurs de consommation de volumes de gaz, des valeurs de consommation de fioul, des valeurs de consommation de pellets, des valeurs de consommation d'eau chaude, des valeurs de variations de température, des valeurs de variations d'éclairage et/ou l'état de fonctionnement de consommateurs de courant (18) individuels, et les valeurs de consommation d'énergie sont enregistrées avec une résolution de données <= à 20 minutes, en particulier <= à 15 minutes.

6. Procédé de commande selon la revendication 5, dans lequel le compteur intelligent enregistre les courbes de consommation d'énergie de l'au moins un consommateur d'énergie (18) individuel.

7. Dispositif de commande (10) destiné à commander un plusieurs consommateur(s) d'énergie (18) à l'intérieur d'un bâtiment (50), configuré pour réaliser un procédé de commande selon l'une des revendications précédentes, dans lequel le dispositif de commande (10) comprend une interface de compteur I/O (12) vers un ou plusieurs compteur(s) de consommation d'énergie (14), en particulier des compteurs intelligents, et une interface de consommateur I/O (16) vers un ou plusieurs consommateur(s) d'énergie (18), un dispositif de pronostic (20) pour analyser des valeurs de consommation d'énergie historisées mises à disposition par l'interface de compteur I/O (12) et pour pronostiquer une consommation d'énergie future (Emp), et un organe de commande (22) pour commander le consommateur d'énergie (18) sur la base de la consommation d'énergie pronostiquée (Emp), sachant que le dispositif de pronostic comprend une unité de corrélation (30) configurée pour établir une corrélation de la consommation d'énergie (Emo) momentanée dans un intervalle de temps antérieur (Tmo) de la période d'observation (Tm) avec des courbes de consommation d'énergie (Eto) dans des intervalles de temps (Tto) antérieurs,
ladite unité de corrélation (30) étant configurée de telle manière qu'est/sont identifié(s) un ou plusieurs profil(s) de consommation modèle(s) (Tt) dont des parties de courbe d'énergie (Eto) dans la période de consommation d'énergie (Tto) entrent en corrélation avec la consommation d'énergie momentanée (Emo), et que le profil de consommation d'énergie (Emp) est déterminé sur la base de la ou des courbe(s) d'énergie (Etp) associée(s) aux tranches de consommation d'énergie (Ttp) intervenant après les périodes de consommation d'énergie (Tto) et
sachant que l'unité de corrélation (30) est configurée pour prendre en compte pour la corrélation des paramètres secondaires tels que l'heure, le jour de la semaine, les conditions météorologiques, les dates calendaires et/ou des notes personnelles dans le calendrier.

8. Dispositif de commande selon la revendication 7, dans lequel le dispositif de commande (10) comprend en outre une interface de données I/O (24) pour recevoir des données provenant de l'Internet (26), en particulier des données sur le prix de l'énergie, des données météorologiques, des données de calendrier personnelles d'un utilisateur et/ou pour recevoir des données de capteurs (28), en particulier des données de capteurs de température intérieure, des données de capteurs de luminosité, des données de capteurs météorologiques, des données de capteurs à contact de fenêtres, des données d'interrupteurs centraux.
